# EUROPEAN PATENT SPECIFICATION

(11) **EP 0 996 647 B1**
(45) Date of publication and mention of the grant of the patent: **08.09.2004**
(21) Application number: 98935058.2
(22) Date of filing: 17.07.1998
(51) Int. Cl.: C08F 2/38

(54) **PROCESS FOR THE PRODUCTION OF OLEFIN POLYMERS HAVING A DESIRABLE MOLECULAR WEIGHT DISTRIBUTION**
VERFAHREN ZUR HERSTELLUNG VON OLEFINPOLYMEREN MIT EINER GEWÜNSCHTEN VERTEILUNG DES MOLEKULARGEWICHTES
PROCEDE DE PRODUCTION DE POLYMERES D'OLEFINE AYANT UNE REPARTITION DE POIDS MOLECULAIRE VOULUE

(30) Priority: 18.07.1997 FI 973050
(43) Date of publication of application: 03.05.2000
(73) Proprietor: Borealis Technology Oy, 06101 Porvoo (FI)
(72) Inventor: FOLLESTAD, Arild, N-3960 Stathelle (NO); HOKKANEN, Harri, FIN-00710 Helsinki (FI); KALLIO, Kalle, FIN-07740 Vanhakylä (FI); ANDELL, Ove, FIN-00960 Helsinki (FI); PALMQVIST, Ulf, S-444 41 Stenungsund (SE)
(74) Representative: Träskman, Berndt Hilding
(86) International application number: PCT/FI1998/000599
(87) International publication number: WO 1999/003897

(56) References cited:
- WO-A-92/15619
- US-A- 4 851 488
- US-A- 4 859 749
- US-A- 5 134 208
- US-A- 5 684 097
- US-A- 5 739 220

## Description

The invention relates to a process for the production of an olefin polymer having a desirable broad molecular weight distribution, comprising:
a) feeding to a polymerization equipment:
   a₁) a polymerization material comprising at least one olefin,
   a₂) a catalyst system consisting essentially of a metallocene compound of the general formula (I):

      (Cp)ₘM^{a}XₙYₒZₚ (I)

      wherein each Cp is the same or different and is one of an unsubstituted or substituted, fused or non-fused, homo- or heterocyclic cyclopentadienyl, indenyl, tetrahydroindenyl, fluorenyl or octahydrofluorenyl ligand; M is a transition metal of Group 3, 4, 5 or 6 of the Periodic Table (IUPAC 1990) and bound to said ligand Cp at least in an η₅ bonding mode; each X is the or different and is one of a hydrogen atom, a halogen atom, a C₁-C₈ hydrocarbyl group, a C₁-C₈ hydrocarbyl heteroatom group or a tri-C₁-C₈ hydrocarbylsilyl group, two of said groups X optionally forming a metallocyclic ring with each other and M; Y is a bridge atom or group between two of said Cp ligands; Z is a bridge atom or group between one of said Cp ligands and said transition metal M; m is 1-3; n is 1-4; o is 0 or 1; and p is 0 or 1; a = the valene of M = m + n + p, which metallocene is hydrogen sensitive and under zero or constant hydrogen concentration gives olefin polymer with a narrower molecular weight distribution than the polymer having the desirable broad molecular weight distribution, and
   a₃) hydrogen as a molecular weight regulating agent;
b) contacting reactants a₁), a₂) and a₃) during a residence time in the polymerization equipment and under polymerization conditions to give a polymerization mixture; and
c) recovering from said polymerization mixture said polymerization material in the form of the olefin polymer having a desirable broad molecular weight distribution.

Some olefin polymerization catalysts are known to be very sensitive towards hydrogen, i.e. they can efficiently be used together with hydrogen to control the molecular weight of the produced olefin polymer. Catalyst systems that are known to be hydrogen sensitive are mostly conventional Ziegler-Natta catalysts.

Metallocene based catalyst systems are known to be highly hydrogen sensitive. Additionally, the metallocene based catalyst systems during polymerization form only one type of catalytically active centers, which give polymers with a very narrow molecular weight distribution (i.e., in this publication defined as a polymer having a polydispersity index M_{w}/Mₙ ≈ 2, wherein M_{w} is the weight average, and Mₙ the number average molecular weight). In olefin polymers produced by metallocene based catalyst systems, the resulting narrow molecular weight distribution is not always an advantage and can e.g. cause processability problems.

The problems connected with narrow molecular weight distribution of olefin polymers have in the art been solved mainly in two ways.

Firstly, the molecular weight distribution has been broadened by using several distinct and different metallocene based catalysts. By broad molecular weight distribution is in this publication meant a polydispersity index clearly larger than 2 (M_{w}/Mₙ >> 2). See the discussion in Scares, J. B. P., Hamielec, A. E., Metallocene/Alumirioxane Catalysts for Olefin Polymerization, a Review, Polymer Reaction Eng., 3(2), 131-200(1995).

US 4,530,914 discloses a method for producing polyethylene with a broad molecular weight distribution by using a catalyst system comprising an aluminoxane and two or more metallocenes, wherein each metallocene has a different propagation and termination rate. Two or more active centers will then produce polyethylene with two or more average molecular weights, correspondingly, which combined lead to polyethylene having a broad molecular weight distribution.

Secondly, the molecular weight distribution has been broadened by using a polymerization step without hydrogen, and a succeeding step with hydrogen, as molecular weight regulator.

WO 92/15619 discloses a method for producing an olefin polymer having a bimodal (two-peak) molecular weight distribution in two steps. In the first step, high molecular weight olefin polymer is produced in the absence of hydrogen, and in the second step, low molecular weight olefin polymer is produced in the presence of hydrogen.

The process in which hydrogen is omitted in a first step and included in a second step leads to polymer particles always having a bimodal (two maxima) molecular weight distribution, which is not always the ideal when processing and using olefin polymer particles. There is a clear need to sophisticate the means for producing olefin polymer with a desirable broad molecular weight distribution.

The present invention provides a novel process for the production of an olefin polymer having a desirable broad molecular weight distribution. The process comprises the contacting under polymerization conditions of at least one olefin, a catalyst system, which is hydrogen sensitive and under constant hydrogen concentration gives polymer with a narrower molecular weight distribution than the desirable molecular weight distribution, and hydrogen as a molecular weight regulating agent, to give a polymerization mixture (step b). Then, the olefin polymer is recovered from the polymerization mixture (step c).

Characteristic for the present invention is that during said residence time of the contact step b); the absolute and/or partial pressure of the hydrogen is varied by a repeated cycle comprising at first applying a maximal partial pressure of hydrogen and then dropping it or, preferably, allowing it to drop with hydrogen consumption, whereby such cycle is repeated more than once.

"Desirable broad molecular weight distribution" means a polydispersity = M_{w}/Mₙ > 2. Residence time" is the time of the catalyst system staying under polymerization conditions in the polymerization equipment. "Polymerization conditions" are the type and amount of reactants, the reaction pressure, temperature and other parameters, under which polymerization takes place. "Varied or allowed to vary"; vary means partially or completely carrying out the application or release of the partial pressure of hydrogen, allowing to vary means partially or completely letting the partial pressure of hydrogen rise, or drop spontaneously e.g. as a consequence of consumption. "Continuously" means varying the partial pressure of hydrogen or allowing it to vary in a way, which is slower than during the discontinuous filling and emptying of hydrogen in conventional polymerizations. "Varied or allowed to vary by a repeated cycle" means varying or allowing to vary, see above, in a way where the partial pressure of hydrogen returns to its initial value and this is repeated more than once. It may vary between a maximal and minimal value, meaning the maximal and minimal partial pressure of hydrogen corresponding to the minimal and maximal molecular weights, respectively, of said olefin polymer having a desirable broad molecular weight distribution.

So far, narrow molecular weight polymer producing catalysts or so called single active site catalysts have only been combined with the use of hydrogen in a way illustrated by the above described WO 92/15619. Now, it has been discovered that when using a catalyst having a high hydrogen sensitivity producing a very narrow molecular weight distribution, the amount of hydrogen in the polymerization mixture can during the course of the polymerization successfully be varied to produce several polymer fractions with macromolecules having a certain average molecular weight and a narrow molecular weight distribution, resulting in a polymer having a desirable broader molecular weight distribution.

The invention provides essentially two ways (embodiments) of producing olefin polymer with a desirable broad molecular weight distribution, although the invention also covers any combination of the two ways.

According to one embodiment of the invention, the hydrogen concentration (absolute or relative to the monomer concentration) is continuously varied or allowed to vary according to a certain program during the residence time of the catalyst. The higher the hydrogen concentration, the lower is the molecular weight of the produced olefin polymer fraction. The longer time the hydrogen concentration is maintained at approximately the same level, the more polymer having the corresponding molecular weight is produced. Thus an olefin polymer with a tailor-made broad molecular weight distribution can be produced. The method can be explained as follows.

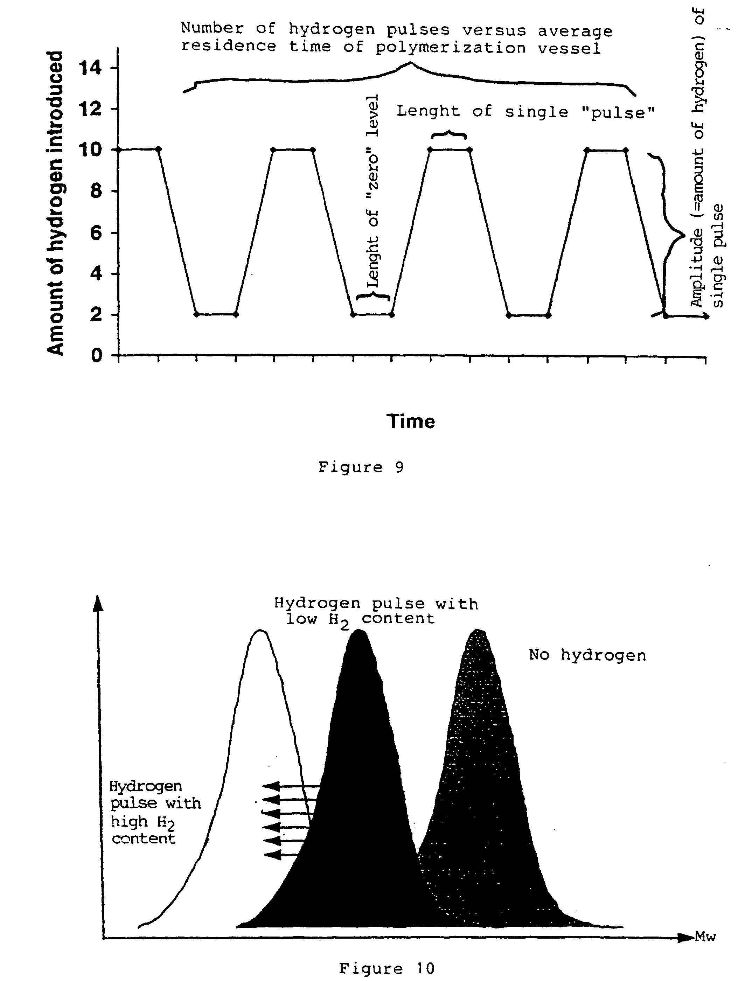

Fig. 9 shows hydrogen pulsing expressed as varying hydrogen amount as a function of time.

Fig 10 shows how the content of hydrogen when pulsating affects the molecular weight and its distribution.

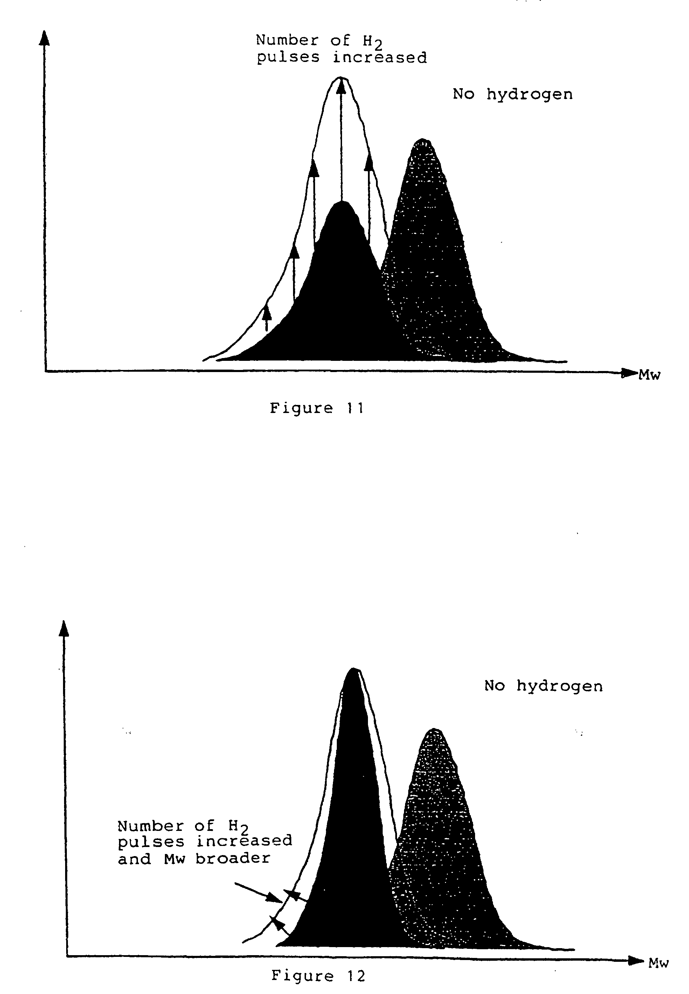

Fig. 11 shows how the number of hydrogen pulses affects the molecular weight and its distribution.

Fig. 12 shows how the length of the hydrogen pulses affect the molecular weight and its distribution.

According to another embodiment of the invention, the hydrogen concentration (absolute or relative to the monomer concentration) is cyclically varied or allowed to vary according to a certain program during the course of the polymerization. Typically, a desired partial pressure of hydrogen is applied to the reactor and after a certain period the pressure is dropped or allowed to drop (by consumption) to an earlier value. Such a cycle is carried out more than once during the course of the polymerization. By regulating the hydrogen concentration (pressure) and giving the polymerization mixture hydrogen one or several pulses of desired amplitude, length, frequency and pulse train duration, a totally homogenous olefin polymer with a tailor-made broad molecular weight distribution can be produced.

Preferably the process according to the invention is a continuous process having at least one reactor, whereby during said residence time of contact step b), the hydrogen concentration is varied or allowed to vary by a repeated cycle. More preferably, a single reactor i used for the claimed process.

According to the invention, the absolute and/or partial partial pressure of hydrogen is varied by a cycle comprising at first applying a maximal partial pressure of hydrogen and then dropping it or, preferably, allowing it to drop with hydrogen consumption, said cycle being carried out more than once during said contact (polymerization) step b). The dropping of the partial pressure of hydrogen according to the invention is not identical with the releasing of the partial pressure of hydrogen which happens at the end of a conventional polymerization.

The maximal partial pressure of hydrogen of said cycle is preferably applied by connecting the polymerization reactor to a pressurized hydrogen source. The dropping of the partial pressure of hydrogen can be carried out by gradually releasing the pressure from the polymerization reactor, but then the monomer escapes with the hydrogen and must be replaced by more monomer. Preferably, the partial pressure of hydrogen is therefore allowed to drop with its consumption as a molecular weight regulating agent.

Said cycle is preferably started during the first half, more preferably at the beginning, of said contact step a). The normal technical adaptation of the cycles to the polymerization conditions, including the polymerization time and the residence time of the growing polymer particles in the reactor, involves only rutinous planning and experimental work for the skilled person. However, if each polymer particle is to have the same treatment, the polymerization material of a continuous process must be the subject of at least two cycles during a time period equal to said residence time.

During the cyclic application of partial pressure of hydrogen according to the invention, the absolute and/or partial partial pressure of hydrogen is preferably dropped or allowed to drop to approximative zero level. This means that macromolecules of maximal molecular weight are preferably also produced and present in the polymer product.

The idea of the invention is to combine a hydrogen sensitive catalyst giving an olefin polymer having a narrow molecular weight distribution with a programmed hydrogen concentration variation to build an olefin polymer having a tailored broad molecular weight and molecular weight distribution. Therefore, the catalyst system preferably comprises a hydrogen sensitive catalyst component having essentially one type of active site and/or giving at constant partial pressure of hydrogen a very narrow molecular. weight distribution corresponding to a polydispersity index M_{w}/Mₙ ≈ 2.

The catalyst system is a hydrogen sensitive metallocene based catalyst system for olefin polymerization. The advance of metallocene catalyst is their very high hydrogen sensitivity and high conversion capability. When these two properties are combined it is possible to use very low hydrogen concentrations and because of high reactivity (conversion of H₂) this small amount of hydrogen is also used rapidly. These two properties makes it possible to cycle hydrogen concentration inside reactor and during very short period consume all hydrogen fed into polymerization vessel. The hydrogen sensitive metallocene is a compound of the general formula (I):

(Cp)ₘM^{a}XₙYₒZₚ (I)

wherein each Cp is the same or different and is one of an unsubstituted or substituted, fused or non-fused, homo- or heterocyclic cyclopentadienyl, indeciyl, tetrahydroindenyl, fluorenyl or octahydrofluorenyl ligand; M is a transition metal of Group 3, 4, 5 or 6 of the Periodic Table (IUPAC 1990) and bound to said ligand Cp at least in an η₅ bonding mode; each X is the same or different and is one of a hydrogen atom, a halogen atom, a C₁-C₈ hydrocarbyl group, a C₁-C₈ hydrocarbyl heteroatom group or a tri-C₁-C₈ hydrocarbylsilyl group, two of said groups X optionally forming a metallocyclic ring with each other and M; Y is a bridge atom or group between two of said Cp ligands; Z is a bridge atom or group between one of said Cp ligands and said transition metal M; m is 1-4; n is 1-4; o is 0 or 1; and p is 0 or 1; a = (valence of M) = m + n + p.

Examples of useful hydrogen sensitive metallocenes to be used as catalyst components in the process according to the invention are e.g. the following:

Unbridged group 4 (IUPAC 1990) metal metallocenes having a ligand comprising a cyclopentadiene ring, such as bis-cyclopentadienyl titanium dimethyl, bis-cyclopentadienyl titanium dichloride, bis-cyclopentadienyl zirconium dimethyl, bis-cyclopentadienyl zirconium dichloride, bis-cyclopentadienyl hafnium dimethyl, bis-cyclopentadienyl hafnium dichloride, bis-indenyl titanium dimethyl, bis-indenyl titanium dichloride, bis-indenyl zirconium dimethyl, bis-indenyl zirconium dichloride, bis-indenyl hafnium dimethyl, bis-indenyl hafnium dichloride, bis-tetrahydroindenyl titanium dimethyl, bis-tetrahydroindenyl titanium dichloride, bis-tetrahydroindenyl zirconium dimethyl, bis-tetrahydroindenyl zirconium dichloride, bis-tetrahydroindenyl hafnium dimethyl, bis-tetrahydroindenyl hafnium dichloride, bis-fluorenyl titanium dimethyl, bis-fluorenyl titanium dichloride, bis-fluorenyl zirconium dimethyl, bis-fluorenyl zirconium dichloride, bis-fluorenyl hafnium dimethyl, bis-fluorenyl hafnium dichloride, bis-octahydrofluorenyl titanium dimethyl, bis-octahydrofluorenyltitanium dichloride, bis-octahydrofluorenylzirconium dimethyl, bis-octahydrofluorenylzirconium dichloride, bis-octahydrofluorenylhafnium dimethyl, bis-octahydrofluorenyl hafnium dichloride, and the like, as well as bridged Group 4 (IUPAC 1990) metal metallocenes having a ligand comprising a cyclopentadiene ring, such as [ethylenebis-cyclopentadienyl] titanium dimethyl, [ethylenebis-cyclopentadienyl] titanium dichloride, [ethylenebis-cyclopentadienyl] zirconium dimethyl, [ethylenebis-cyclopentadienyl] zirconium dichloride, [ethylenebis-cyclopentadienyl] hafnium dimethyl, [ethylenebis-cyclopentadienyl] hafnium dichloride, [ethylenebis-indenyl] titanium dimethyl, [ethylenebis-indenyl] titanium dichloride, [ethylenebis-indenyl] zirconium dimethyl, [ethylenebis-indenyl] zirconium dichloride, [ethylenebis-indenyl] hafnium dimethyl, [ethylenebis-indenyl] hafnium dichloride, [ethylenebis-tetrahydroindenyl] titanium dimethyl, [ethylenebis-tetrahydroindenyl] titanium dichloride, [ethylenebis-tetrahydroindenyl] zirconium dimethyl, [ethylenebis-tetrahydroindenyl] zirconium dichloride, [ethylenebis-tetrahydroindenyl] hafnium dimethyl, [ethylenebis-tetrahydroindenyl] hafnium dichloride, [ethylenebis-fluorenyl] titanium dimethyl, [ethylenebis-fluorenyl] titanium dichloride, [ethylenebis-fluorenyl] zirconium dimethyl, [ethylenebis-fluorenyl] zirconium dichloride, [ethylenebis-fluorenyl] hafnium dimethyl, [ethylenebis-fluorenyl] hafnium dichloride, [ethylenebis-octahydrofluorenyl] titanium dimethyl, [ethylenebis-octahydrofluorenyl] titanium dichloride, [ethylenebis-octahydrofluorenyl] zirconium dimethyl, [ethylenebis-octahydrofluorenyl] zirconium dichloride, [ethylenebis-octahydrofluorenyl] hafnium dimethyl, [ethylenebis-octahydrofluorenyl] hafnium dichloride, [dimethylsilylenebis-cyclopentadienyl] titanium dimethyl, [dimethylsilylenebis-cyclopentadienyl] titanium dichloride, [dimethylsilylenebis-cyclopentadienyl] zirconium dimethyl, [dimethylsilylenebis-cyclopentadienyl] zirconium dichloride, [dimethylsilylenebis-cyclopentadienyl] hafnium dimethyl, [dimethylsilylenebis-cyclopentadienyl] hafnium dichloride, [dimethylsilylenebis-indenyl] titanium dimethyl, [dimethylsilylenebis-indenyl] titanium dichloride, [dimethylsilylenebis-indenyl] zirconium dimethyl, [dimethylsilylenebis-indenyl] zirconium dichloride, [dimethylsilylenebis-indenyl] hafnium dimethyl, [dimethylsilylenebis-indenyl] hafnium dichloride, [dimethylsilylenebis-tetrahydroindenyl] titanium dimethyl, [dimethylsilylenebis-tetrahydroindenyl] titanium dichloride, [dimethylsilylenebis-tetrahydroindenyl] zirconium dimethyl, [dimethylsilylenebis-tetrahydroindenyl] zirconium dichloride, [dimethylsilylenebis-tetrahydroindenyl] hafnium dimethyl, [dimethylsilylenebis-tetrahydroindenyl] hafnium dichloride, [dimethylsilylenebis-fluorenyl] titanium dimethyl, [dimethylsilylenebis-fluorenyl] titanium dichloride, [dimethylsilylenebis-fluorenyl] zirconium dimethyl, [dimethylsilylenebis-fluorenyl] zirconium dichloride, [dimethylsilylenebis-fluorenyl] hafnium dimethyl, [dimethylsilylenebis-fluorenyl] hafnium dichloride, [dimethylsilylenebis-octahydrofluorenyl] titanium dimethyl, [di-methylsilylenebis-octahydrofluorehyl] titanium dichloride, [dimethylsilylenebis-octahydrofluorenyl] zirconium dimethyl, [dimethylsilylenebis-octahydrofluorenyl] zirconium dichloride, [dimethylsilylenebis-octahydroflubrenyl] hafnium dimethyl, [dimethylsilylenebis-octahydrofluorenyl] hafnium dichloride.

The metallocene can be used with any activating cocatalyst including all kinds of compounds generating cationical metallocenes such as ionic coactivators triphenyl-pentafluoroboron and triphenylcarbenium tetranaphthylfluoro boron, but it is preferable if it is used with an organoaluminium component, most preferably an aluminoxane component. The aluminoxane is a compound of the general formula (II):

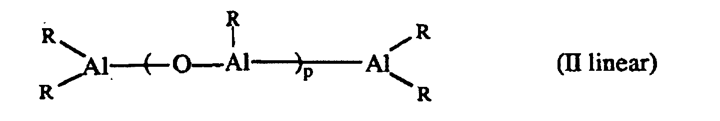

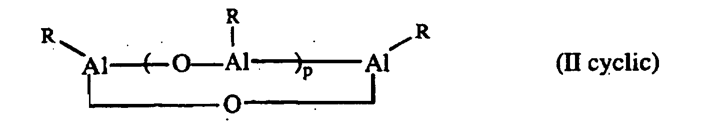

(OAlR)ₚ (II general)

wherein each R is the same or different and is a C₁-C₁₀ alkyl group, and p is an integer between 1 and 40.

The metallocene is according to one embodiment of the invention contacted with a soluble aluminoxane to form a catalyst system. According to another embodiment, a mixture of the metallocene and an aluminium alkyl in a hydrocarbon solvent is treated with moisture such as moist inert gas to hydrolyze the alkyl aluminium to catalytically active aluminoxane.

According to one embodiment of the invention, the metallocene and the aluminoxane are contacted with and deposited on an inert support such as silica, alumina, a derivative or mixture thereof, to give a hydrogen sensitive supported catalyst system. When using a metallocene and an organoaluminium compound, the atomic ratio of aluminium to metallocene metal is preferably from 5:1 to 5000:1 preferably from 10:1 to 200:1.

The preparation method of the catalyst system is not critical for the invention, because it is known in the art how to prepare hydrogen sensitive catalyst systems, which produce olefin polymers with a narrow molecular weight distribution.

The catalyst system used by the invention can comprise a metallocene catalyst component and an aluminoxane, or a reaction product thereof, either in a solution or supported on a solid carrier, the last mentioned representing a more preferred embodiment.

In the process according to the invention, the contacting step b), i.e. the polymerization, is preferably carried out as a solution, slurry or gas phase polymerization.

Usually, the time of a cycle of applying and dropping the partial pressure of hydrogen is about 1/30 to about 1/2 of the catalyst residence time in slurry polymerization and about 1/100 to about 1/10 of the polymer material residence time in gas-phase polymerization. Thus; gas-phase polymerization is preferred if several partial pressure of hydrogen pulses are used to broaden the molecular weight of the olefin polymer. Thus gas-phase polymerization has from 2 to 50, preferably from 5 to 40, most preferably from 10 to 30 cycles during the residence time of the catalyst in the reactor. This means that during a polymerization, the number of cycles may be even more.

The contact step (polymerization) is performed in one or more, preferably in one single reactor and/or using only one or more types of catalyst component. The polymerization process is a continuous one. The preferred polymerization temperature, pressure and average catalyst system residence time are, independently: 40-200 °C, preferably 60-100 °C; 1-100 bar in a slurry process and 1-20 bar in a gas-phase process; at least 10 min, preferably at least 30 min.; respectively. The total amount of hydrogen used in the process preferably varies from 0.0001 to 50 mol percent, more preferably 1 to 40 mol percent, based on the total amount of hydrogen and olefin present.

The olefins used in the process are preferably α-olefins having from 2 to 12 carbon atoms. Such olefins are ethene, propene, 1-butene, 1-pentene, 3-methyl-1-butene, 1-hexene, 3-methyl-1-pentene, 4-methyl-1-pentene, 1-heptene, 1-octene, 3-ethyl-1-hexene and 1-decene. Also dienes such as hexadiene, butadiene, decadiene etc. can be used. The olefins can be used together in the process, giving modified homopolymers or copolymers.

### Examples

### Preparation of the catalyst (Catalyst 1)

1143 g of SYLOPOL 55 SJ silica carrier, calcinated at 500 °C was introduced into a catalyst preparation reactor. A complex solution was prepared having 13.0 g n-butylcyclopentadienyl zirconium dichloride, 1400 ml of 30 wt-% MAO and 300 ml of dry toluene. This complex solution of total volume of 1700 ml was slowly introduced into a reactor having the carrier. After a 45 min. reaction time between the complex solution and the SYLOPOL 55 SJ carrier drying of the catalyst was started by feeding dry nitrogen throughout the reactor. After drying, the yield of catalyst was 1393 g. The catalyst has Zr content 0.18 wt-% and Al/Zr = 200.

### Test polymerizations, general method

The polymerizations were performed in a 2 or 3 dm³ stainless steel autoclave reactor equipped with paddle stirrer. 1.3 or 1.8 dm³ dried and deoxygenated isobutane/pentane used as medium was charged to the reactor which was beforehand dried at 100 °C in vacuum and then purged with nitrogen. The catalyst was weighed into a metal cylinder in a glove box. Then the catalyst cylinder was connected to the reactor and the catalyst was added to the reactor with a help of nitrogen pressure. The reactor was heated up to desired polymerization temperature and then ethylene was introduced to the reactor. When hydrogen was used it was charged to a constant volume cylinder and flushed with ethylene to the reactor in the beginning of the polymerization or in several batches during the polymerization. The total pressure was adjusted to have a desired ethylene partial pressure in the reactor. Continuous flow of ethylene kept the total pressure constant. The polymerization was continued for a desired time and after that the polymerization was stopped by rapidly releasing pressure and cooling down the reactor.

Examples 1 to 7 has been done according to above described polymerization method. Examples 1 to 6 are used to illustrate the hydrogen sensitivity of metallocene catalysts. Example 7 shows example to this invention where hydrogen has been pulsed several times to the reactor during polymerization run. Examples 8 and 9 present continuous polymerization performed in slurry loop reactor.

### Example 1 (Comparative)

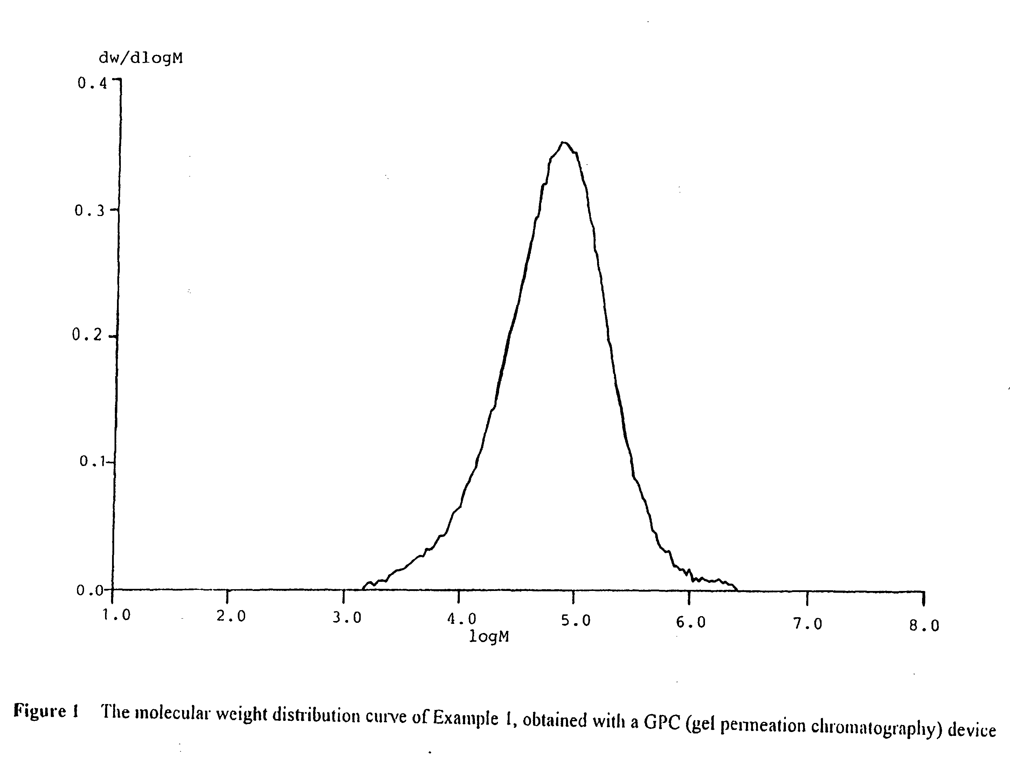

The polymerization was performed in 2 dm³ reactor and 1.3 dm³ isobutane was used as medium. 114 mg of Catalyst 1 was used in polymerization. No hydrogen was used. Ethylene partial pressure in the reactor was 3.5 bar. Polymerization temperature was 80 °C. Polymerization was continued for 60 minutes and yield was 26 g of PE. The Mw was 114,500 and Mw/Mn was 3.2. Figure 1 shows the GPC curve which shows unimodal MWD.

### Example 2 (Reference)

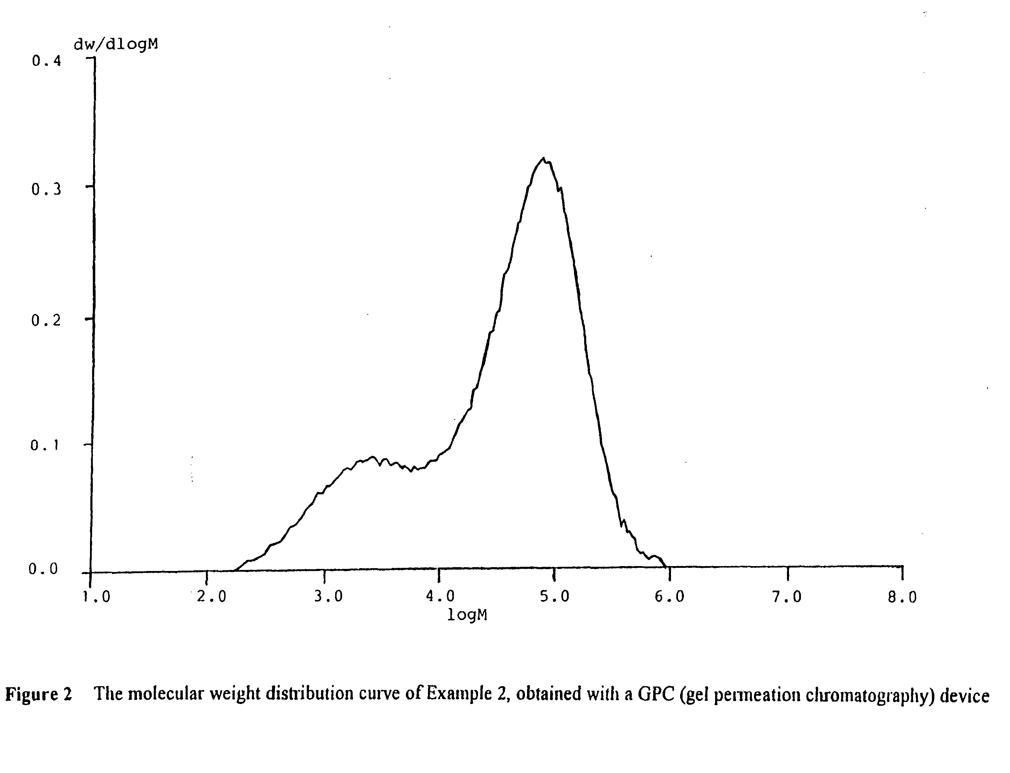

The polymerization was made. like Example 1 but here 116 mg of Catalyst 1 was used and hydrogen was added from cylinder (660 kPa/45.5 cm³). The yield was 79 g. The Mw was 71,200 and MWD 13.1. The GPC curve in Figure 2 shows clearly bimodal MWD.

### Example 3 (Reference)

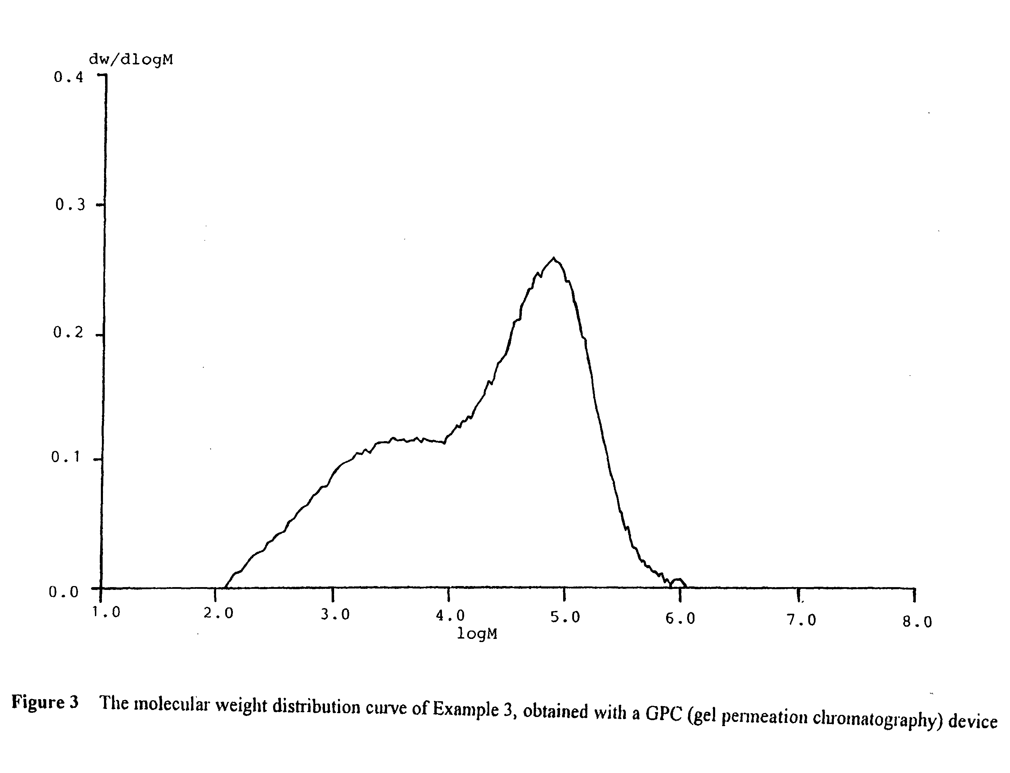

The polymerization was performed as in Example 2 but here 100 mg of Catalyst 1 was used and polymerization time was only 30 minutes. The yield was 42 g of PE. The Mw was 57,400 and Mw/Mn was 19.2. The GPC curve in Figure 3 shows clearly bimodal MWD where the low Mw part is larger than in Example 2.

### Example 4 (Reference)

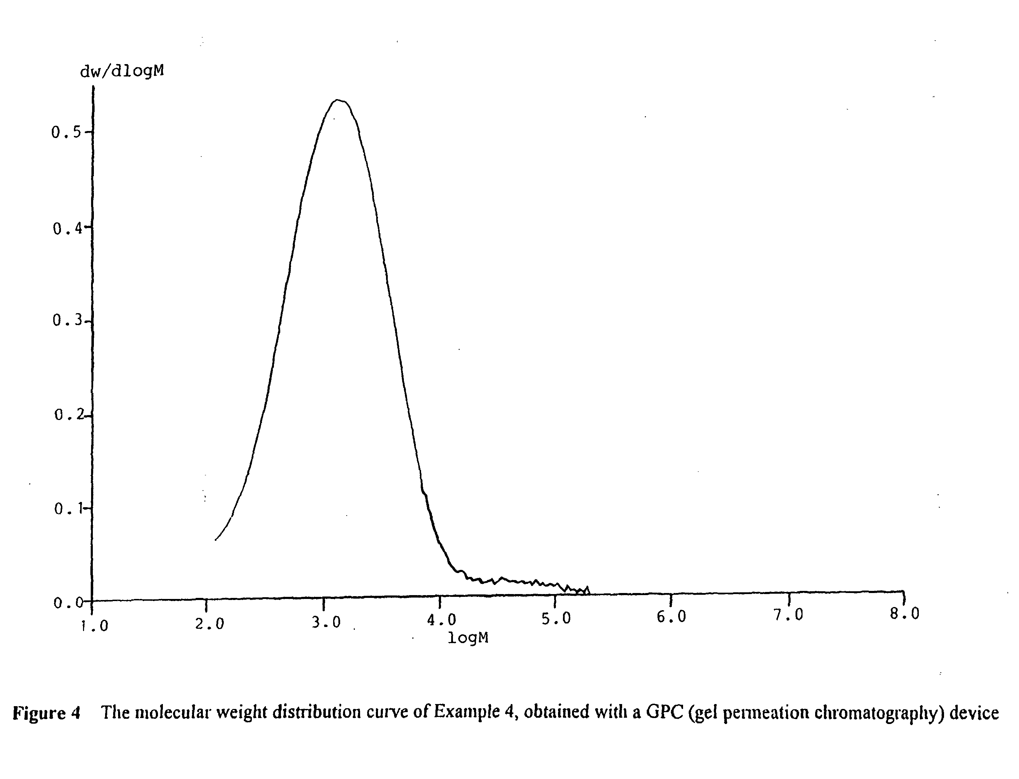

The polymerization was performed as in Example 2 but here 100 mg of Catalyst 1 was used and polymerization time was only 10 minutes. The yield was 7 g of PE. The Mw was 2,800 and MWD 3.1. The GPC curve in Figure 4 shows unimodal MWD with very low Mw.

### Example 5 (Reference)

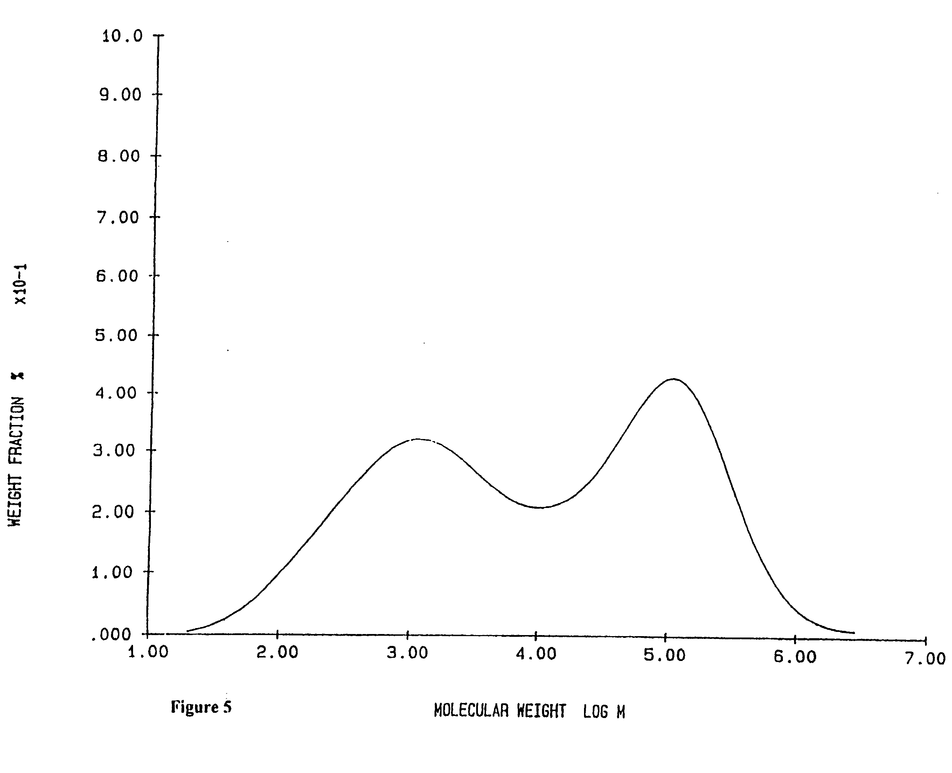

The polymerization was performed in 3 dm³ reactor and 1.8 dM3 n-pentane was used as medium. 36 mg of catalyst made according to above was used in polymerization. Hydrogen was fed from the cylinder (660 kPa/45.5 cm³) . Ethylene partial pressure in the reactor was 10 bar. Polymerization was continued for 60 minutes and yield was 99 g of PE. The Mw was 168,500 and Mw/Mn was 9.1. Figure 5 shows the GPC curve which shows bimodal MWD.

### Example 6 (Reference)

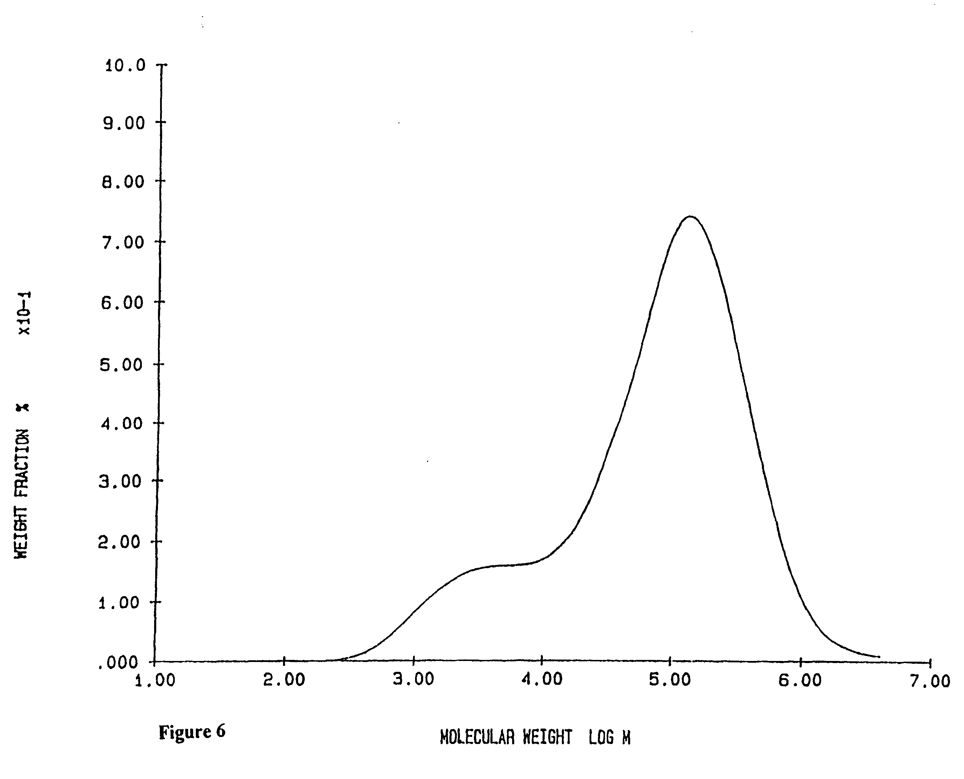

The polymerization was performed in 3 dm³ reactor and 1.8 dm³ n-pentane was used as medium. 35 mg of catalyst made according to above was used in polymerization. Hydrogen was fed from the cylinder (2640 kPa/45.5 cm³). Ethylene partial pressure in the reactor was 10 bar. Polymerization was continued for 60 minutes and yield was 87 g of PE. The Mw was 98,300 and Mw/Mn was 63.2. Figure 6 shows the GPC curve which shows bimodal MWD.

### Example 7

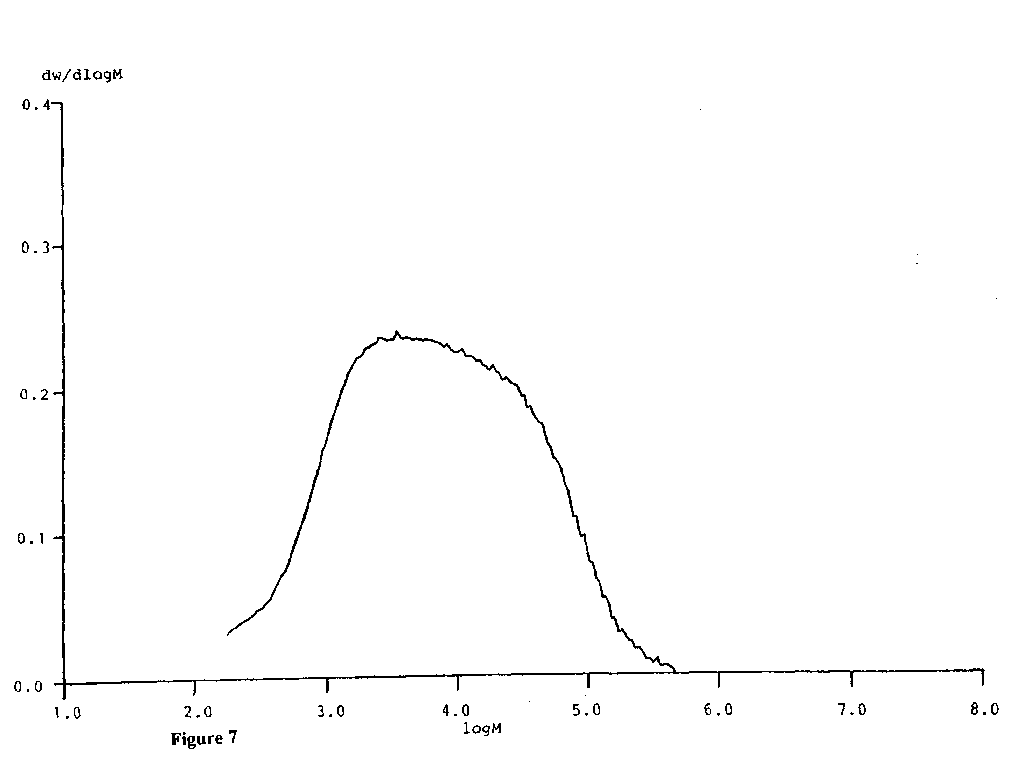

The polymerization was performed in 3 dm³ reactor and 1.8 dm³ n-pentane was used as medium. 65 mg of Catalyst 1 made according to above was used in polymerization. Hydrogen was fed from cylinder in 5 equal size pulses (500 kPa/50 cm³) every 10 minutes. Ethylene partial pressure in the reactor was 10 bar. Polymerization was continued for 60 minutes and yield was 250 g of PE. The Mw was 21,350 and Mw/Mn was 8.35. Figure 7 shows the GPC curve which shows clearly very broad MWD.

### Example 8 (Reference)

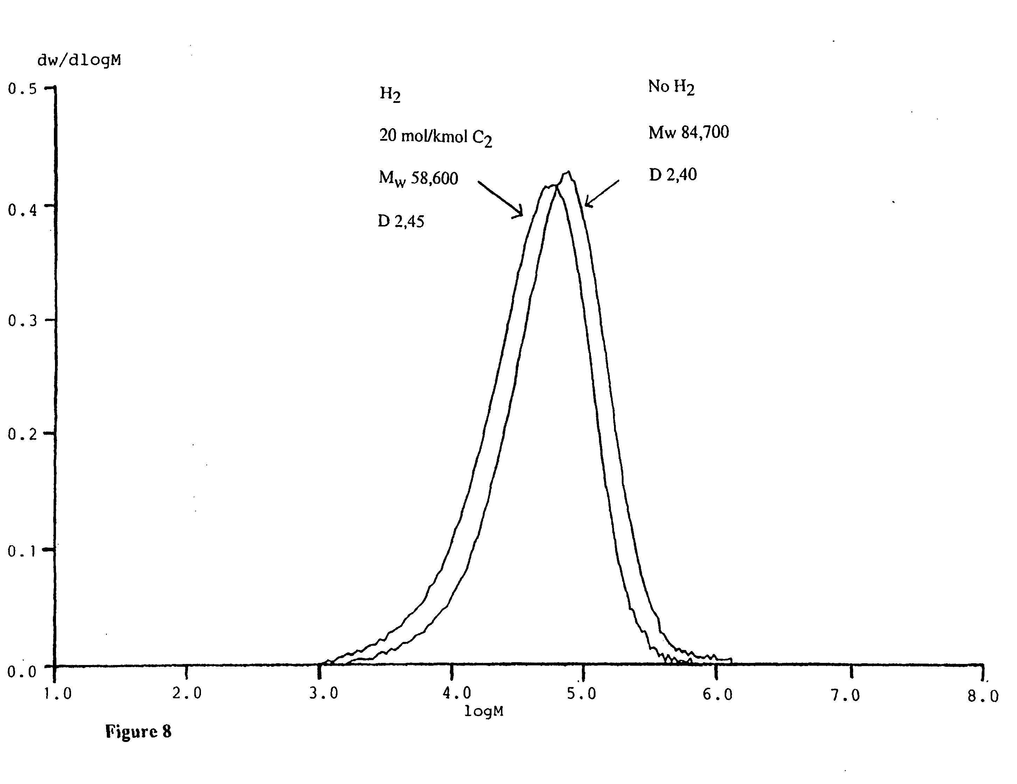

Loop reactor which was 500 dm³ was run in 80 °C feeding continuously isobutane, Catalyst 1, ethylene and 1-hexene to the reactor. Ethylene-hexene copolymer discharged from the reactor had Mw 84,700 and MWD 2.4. Figure 8 shows the MWD obtained with GPC.

### Example 9 (Reference)

Polymerization was performed as in Example 8 but here hydrogen was fed so that hydrogen/ethylene ratio was 20 mol/kmol. The polymer discharged from the reactor had Mw 58,600 and MWD 2.45. Figure 8 shows the MWD obtained with GPC.

The results are disclosed in Tables 1 to 4.

**Table 1**

| Polymerizations with Catalyst 1: 80 °C, 3.5 bar ethylene and 1.3 dm³ isobutane | | | | | | | |
|---|---|---|---|---|---|---|---|
| Ex. | Catalyst mg | H₂ kPa/45.5 cm³ | Pol.time min | Yield gPE | Productivity kg/g | Mw g/mol | Mw/Mn |
| 1 | 114 | 0 | 60 | 26 | 0.23 | 114,500 | 3.2 |
| 2 | 116 | 660 | 60 | 79 | 0.68 | 71,200 | 13.1 |
| 3 | 100 | 660 | 30 | 42 | 0.42 | 57,400 | 19.2 |
| 4 | 110 | 660 | 10 | 7 | 0.06 | 2,800 | 3.1 |

**Table 2**

| Polymerizations with Catalyst 1: 70 °C, 10 bar ethylene and 1.3 dm³ isobutane | | | | | | | |
|---|---|---|---|---|---|---|---|
| Ex. | Catalyst mg | H₂ kPa/45.5 cm³ | Pol.time min | Yield gPE | Productivity kg/g | Mw g/mol | Mw/Mn |
| 5 | 36 | 660 | 60 | 99 | 2.75 | 168,500 | 9.1 |
| 6 | 35 | 2640 | 60 | 87 | 2.49 | 98.300 | 63.2 |

**Table 3**

| Polymerizations with Catalyst 1: 70 °C, 10 bar ethylene, 1.8 dm³ n-pentane | | | | | | | |
|---|---|---|---|---|---|---|---|
| Ex. | Catalyst mg | H₂ kPa/50 cm³ | Pol.time min | Yield gPE | Productivity kg/g | Mw g/mol | Mw/Mn |
| 7 | 65 | 5x500 | 60 | 250 | 3.85 | 21,350 | 8.35 |

**Table 4**

| Polymerization using Catalyst 1 in continuous mode in the isobutane slurry of a loop reactor | | | | |
|---|---|---|---|---|
| Ex. | H₂ feed mol/kmol C2 | MFR(2) g/10 min | Mw g/mol | Mw/Mn |
| 8 | 0 | 4.4 | 84,700 | 2.40 |
| 9 | 20 | 11.6 | 58,600 | 2.45 |

Experiments 1, 2, 3 and 4 in Table 1 show how hydrogen affects polymer MWD. The homopolymer run (Ex. 1) shows unimodal MWD compared to run with hydrogen (Ex. 2) where a bimodal MWD was obtained. Also the very short run (Ex. 4) shows unimodal MWD but with very low Mw. These experiments with table 2 show that hydrogen is consumed during the longer polymerization runs.

Experiment 7 in table 3 shows that when hydrogen was fed every ten minutes a broad MWD was obtained. Here the hydrogen level was not zero and homopolymer with high Mw was not obtained. By adjusting the amount of hydrogen pulses and frequency of the pulses the Mw and MWD can be controlled.

Table 4 shows that when hydrogen was fed continuously the MWD can be moved downwards very effectively and no broadening of MWD was seen.

### Examples 10-16 (Example 10 is a comparative example)

### Preparation of the catalyst (Catalyst 2)

17 kg of SYLOPOL 55 SJ silica carrier, calcinated at 600 °C was introduced into catalyst preparation reactor. The complex solution was prepared having 229.4 g n-butylcyclopentadienyl hafnium dichloride, 18.2 kg of 30 wt-% MAO and 4.5 kg of dry toluene. This complex solution was introduced slowly into reactor having the carrier. After 2 h reaction time between the complex solution and SYLOPOL 55 SJ carrier the drying of catalyst was started by feeding dry nitrogen throughout catalyst preparation reactor. After drying the yield of ready catalyst was 22.5 kg. The ready catalyst has Hf content 0.18 wt-% and Al/Zr=200.

### Polymerization

The polymerization was performed in a continuous mode in gas phase fluidized reactor. Up through the polymer powder bed which was supported by a die plate, was flowing a gas that fluidized the powder bed. This reactor gas was then cooled in order to remove the heat of polymerization and recirculated back to the powder bed.

Catalyst powder was fed into the bed on a semi-continuous basis. Ethylene, 1-butene and nitrogen was added continuously to the reactor system. Hydrogen was fed during short periods at regular intervals (see Table).

Polymer powder, along with some reactor gas, was removed from the reactor on a semi-continuous basis to keep the bed level constant. Part of the recirculation gas was bled off continuously to keep the total pressure constant.

The approximate hold-up of polymer powder in the bed was 50 kg. The reactor temperature was kept at 75 °C, total pressure was 17.5 bar, the ethylene partial pressure in the reactor was about 15 bar. The total volume of the reactor system (reactor and gas recirculation system) was 1.6 m³. The amount of recirculation gas was about 1600 kg/h. The bleed from the recirculation gas was 16 kg/h.

During the examples 10-16 the content of hydrogen pulsed into reactor and the length of pulses has been changed. The parameters properties of produced polymer are collected at Table 5.

**Table 5**

| The polymerization at continuous fluidized bed gas phase reactor (Catalyst 2). | | | | | | | | |
|---|---|---|---|---|---|---|---|---|
| | | Ex. 10 | Ex. 11 | Ex. 12 | Ex. 13 | Ex. 14 | Ex. 15 | Ex. 16 |
| PROCESS PARAMETERS | | | | | | | | |
| H₂ feed | g/h | 0.0005 | 0.0025 | 0.0625 | 0.25 | 0.7 | 1 | 0.04 |
| H₂ feed flow time | min | Continuous | 10 | 2 | 1 | 1 | 1 | 15 |
| H₂ cycle time | min | - | 60 | 90 | 150 | 150 | 150 | 180 |
| Butene flow | kg/h | 1.2 | 1.2 | 1.2 | 1.2 | 1.2 | 1.2 | 1.3 |
| Production rate | kg/h | 9 | 7 | 9 | 8 | 9 | 8 | 8 |
| Polymer average residence time | H | 6 | 7 | 6 | 5.5 | 5.5 | 6 | 7 |

| PRODUCT ANALYSES | | | | | | | | |
|---|---|---|---|---|---|---|---|---|
| Ash | ppm | 240 | n.a. | 230 | 150 | n.a. | n.a. | 170 |
| MFR₂ | g/10 min | 6 | 2 | 4.3 | 7 | 4.5 | 5.5 | 7.5 |
| MFR₂₁ | g/10 min | 100 | 38 | 90 | 170 | 105 | 200 | 216 |
| FRR_{21/2} | - | 17 | 19 | 21 | 24 | 23 | 36 | 29 |
| Density | g/dm³ | 933 | 930 | 934 | 931 | 934 | 936 | 935 |

## Claims

1. A process for the production of an olefin polymer having a desirable broad molecular weight distribution, comprising:
a) feeding to a polymerization equipment:
a₁) a polymerization material comprising at least one olefin,
a₂) a catalyst system consisting essentially of a metallocene compound of the general formula (I):
(Cp)ₘM^{a}XₙYₒZₚ (I)
wherein each Cp is the same or different and is one of an unsubstituted or substituted, fused or non-fused, homo- or heterocyclic cyclopentadienyl, indenyl, tetrahydroindenyl, fluorenyl or octahydrofluorenyl ligand; M is a transition metal of Group 3, 4, 5 or 6 of the Periodic Table (IUPAC 1990) and bound to said ligand Cp at least in an η₅ bonding mode; each X is the same or different and is one of a hydrogen atom, a halogen atom, a C₁-C₈ hydrocarbyl, group, a C₁-C₈ hydrocarbyl heteroatom group or a tri-C₁-C₈ hydrocarbylsilyl group, two of said groups X optionally forming a metallocyclic ring with each other and M; Y is a bridge atom or group between two of said Cp ligands; Z is a bridge atom or group between one of said Cp ligands and said transition metal M; m is 1-3; n is 1-4; o is 0 or 1; and p is 0 or 1; a = the valene of M = m + n + p, which metallocene is hydrogen sensitive and under zero or constant hydrogen concentration gives olefin polymer with a narrower molecular weight distribution than the polymer having the desirable broad molecular weight distribution, and
a₃) hydrogen as a molecular weight regulating agent;
b) contacting reactants a₁), a₂) and a₃) during a residence time in the polymerization equipment and under polymerization conditions to give a polymerization mixture; and
c) recovering from said polymerization mixture said polymerization material in the form of the olefin polymer having a desirable broad molecular weight distribution,
**characterized in that** during said residence time of the contact step b), the absolute and/or partial pressure of hydrogen is varied by a repeated cycle comprising at first applying a maximal partial pressure of hydrogen and then dropping it or, preferably, allowing it to drop with hydrogen consumption, whereby such cycle is repeated more than once.

2. A process according to claim 1, **characterized in that** it is carried out as a continuous process.

3. A process according to claim 1 or 2, **characterized in that** it is carried out in a single polymerization reactor or a series of polymerization reactors.

4. A process according to claim 1, 2 or 3, **characterized in that** said cycle is started during the first half, preferably at the beginning, of said contact step b).

5. A process according to any of claims 1 to 4, **characterized in that** said absolute and/or partial pressure of the hydrogen is dropped or allowed to drop to approximative zero level.

6. A process according to any one of the preceding claims, **characterized in that** the metallocene has essentially one type of active site and/or giving at constant partial pressure of hydrogen a M_{w}/Mₙ ≈ 2, preferably a metallocene catalyst component for olefin polymerization.

7. A process according to any one of the preceding claims, **characterized in that** the catalyst system comprises an organoaluminium component, preferably an aluminoxane catalyst component for olefin polymerization.

8. A process according to claim 7, **characterized in that** said aluminoxane is a compound of the general formula (II): 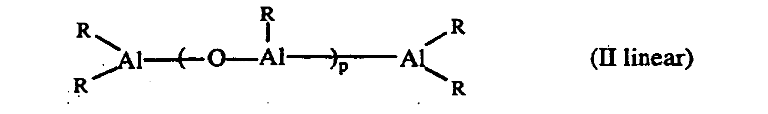 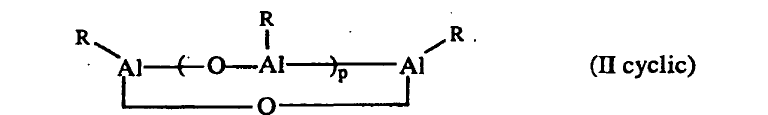
(OAlR)ₚ (II general)
wherein each R is the same or different and is a C₁-C₁₀ alkyl group, and p is an integer between 1 and 40.

9. A process according to any one of the preceding claims, **characterized in that** the catalyst system comprises a metallocene catalyst component and an aluminoxane, or a reaction product thereof, supported on a solid support.

10. A process according to any one of the preceding claims, **characterized in that** only one type of catalyst component is used.

11. A process according to any one of the preceding claims, **characterized in that** the polymerization conditions are those of solution, slurry or gas-phase polymerization, preferably gas-phase polymerization.

12. A process according to claim 11, **characterized in that** said gas-phase polymerization has from 2 to 50, preferably from 5 to 40, most preferably from 10 to 20 repeated cycles of varying the partial pressure of hydrogen during the residence time of the polymer material in the equipment.

13. A process according to any one of the preceding claims, **characterized in that** the polymerization conditions comprise a temperature of between 40 and .200 °C, preferably between about 60 and about 100 °C.

14. A process according to any one of the preceding claims, **characterized in that** the polymerization conditions comprise a pressure of about 1-100 bar.

15. A process according to any one of the preceding claims, **characterized in that** the polymerization conditions comprise a polymer particle residence time of at least 5 minutes, preferably at least 20 minutes.

16. A process according to any one of the preceding claims, **characterized in that** the olefin is selected from linear or cyclic olefins carrying one or more double bonds, optionally together with one or more dienes, preferably ethene, propene, 1-butene, 3-methyl-1-butene, 1-pentene, 3-methyl-1-pentene, 4-methyl-1-pentene, 1-hexene, 3-ethyl-1-hexene, 1-heptene, 1-octene and 1-decene, preferably ethene, optionally together with any of said other listed olefins or diolefins such as hexadiene, butadiene, decadiene.

## Patentansprüche

1. Verfahren zur Herstellung eines Olefinpolymers mit einer erwünschten weiten Molekulargewichtsverteilung, welches umfaßt:
a) in eine Polymerisationsvorrichtung werden eingeführt
a₁) ein Polymerisationsmaterial, das mindestens ein Olefin umfaßt,
a₂) ein Katalysatorsystem, das im wesentlichen aus einer Metallocenverbindung der allgemeinen Formel (I) besteht:
(Cp)ₘM^{a}XₙYₒZₚ (I)
worin Cp jeweils gleich oder verschieden ist und ein unsubstituierter oder substituierter, kondensierter oder nicht kondensierter, homo- oder heterocyclischer Cyclopentadienyl-, Indenyl-, Tetrahydroindenyl-, Fluorenyl- oder Octahydrofluorenyl-Ligand ist;
M ein Übergangsmetall der Gruppe 3, 4, 5 oder 6 des Periodensystems (IUPAC 1990) ist und zumindest in der η₅-Bindungsform an den Liganden Cp gebunden ist;
X jeweils gleich oder verschieden ist und ein Wasserstoffatom, ein Halogenatom, ein C₁-C₈-Kohlenwasserstoffrest, ein heteroaromatischer C₁-C₈-Kohlenwasserstoffrest oder eine Tri-C₁-C₈-hydrocarbylsilylgruppe ist, wobei zwei der Gruppen X miteinander und mit M gegebenenfalls einen metallocyclischen Ring bilden;
Y ein Brückenatom oder -rest zwischen zwei der Liganden Cp ist;
Z ein Brückenatom oder -rest zwischen einem der Liganden
Cp und dem Übergangsmetall M ist;
m gleich 1 - 3 ist;
n gleich 1 - 4 ist;
o gleich 0 oder 1 ist; und
p gleich 0 oder 1 ist;
a = Wertigkeit von M = m + n + p ist,
wobei das Metallocen für Wasserstoff empfindlich ist und bei einer Wasserstoffkonzentration von Null oder einer konstanten Wasserstoffkonzentration ein Olefinpolymer mit einer engeren Molekulargewichtsverteilung als das Polymer mit der erwünschten weiten Molekulargewichtsverteilung ergibt; und
a₃) Wasserstoff als ein das Molekulargewicht regelndes Mittel;
b) in Kontakt bringen der Reaktanten a₁), a₂) und a₃) während der Verweilzeit in der Polymerisationsvorrichtung und bei Polymerisationsbedingungen, wodurch ein Polymerisationsgemisch erhalten wird; und
c) Gewinnen des Polymerisationsmaterials in Form des Olefinpolymers mit der gewünschten weiten Molekulargewichtsverteilung aus dem Polymerisationsgemisch,
**dadurch gekennzeichnet, daß** während der Verweilzeit des Kontaktschrittes b) der absolute und/oder Partialdruck von Wasserstoff durch einen wiederholten Zyklus geändert wird, welcher umfaßt: zuerst wird der maximale Partialdruck von Wasserstoff angewendet und danach wird dieser verringert oder er kann vorzugsweise mit dem Wasserstoffverbrauch abnehmen, wobei dieser Zyklus mehr als einmal wiederholt wird.

2. Verfahren nach Anspruch 1, **dadurch gekennzeichnet, daß** es als kontinuierliches Verfahren durchgeführt wird.

3. Verfahren nach Anspruch 1 oder 2, **dadurch gekennzeichnet, daß** es in einem einzigen Polymerisationsreaktor oder in einer Reihe von Polymerisationsreaktoren durchgeführt wird.

4. Verfahren nach Anspruch 1, 2 oder 3, **dadurch gekennzeichnet, daß** der Zyklus während der ersten Hälfte, vorzugsweise zu Beginn, des Kontaktschrittes b) gestartet wird.

5. Verfahren nach einem der Ansprüche 1 bis 4, **dadurch gekennzeichnet, daß** der absolute und/oder Partialdruck von Wasserstoff auf einen Wert von ungefähr Null verringert wird oder abnehmen kann.

6. Verfahren nach einem der vorstehenden Ansprüche, **dadurch gekennzeichnet, daß** das Metallocen im wesentlichen eine Art einer aktiven Stelle aufweist und/oder bei einem konstanten Partialdruck von Wasserstoff M_{w}/Mₙ = 2, vorzugsweise eine Metallocenkatalysatorkomponente für die Olefinpolymerisation, ergibt.

7. Verfahren nach einem der vorstehenden Ansprüche, **dadurch gekennzeichnet, daß** das Katalysatorsystem eine Organoaluminiumkomponente, vorzugsweise eine Aluminoxankatalysatorkomponente für die Olefinpolymerisation umfaßt .

8. Verfahren nach Anspruch 7, **dadurch gekennzeichnet, daß** das Aluminoxan eine Verbindung der allgemeinen Formel (II) ist: 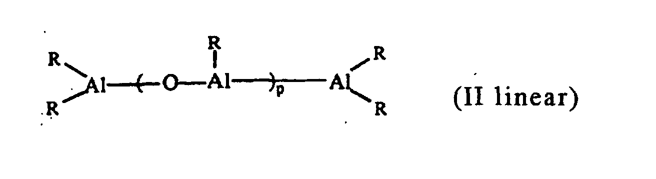 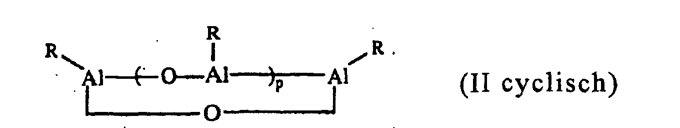
(OAlR)ₚ (allgemein),
worin R jeweils gleich oder verschieden ist und eine C₁-C₁₀-Alkylgruppe ist und p eine ganze Zahl zwischen 1 und 40 ist.

9. Verfahren nach einem der vorstehenden Ansprüche, **dadurch gekennzeichnet, daß** das Katalysatorsystem eine Metallocenkatalysatorkomponente und ein Aluminoxan oder ein Reaktionsprodukt davon, auf einem festen Träger getragen, umfaßt.

10. Verfahren nach einem der vorstehenden Ansprüche, **dadurch gekennzeichnet, daß** nur ein Typ der Katalysatorkomponente verwendet wird.

11. Verfahren nach einem der vorstehenden Ansprüche, **dadurch gekennzeichnet, daß** die Polymerisationsbedingungen die einer Lösungs-, Suspensions- oder Gasphasenpolymerisation, vorzugsweise einer Gasphasenpolymerisation, sind.

12. Verfahren nach Anspruch 11, **dadurch gekennzeichnet, daß** die Gasphasenpolymerisation während der Verweilzeit des Polymermaterials in der Vorrichtung 2 bis 50, vorzugsweise 5 bis 40, besonders bevorzugt 10 bis 20 wiederholte Zyklen der Änderung des Partialdrucks von Wasserstoff aufweist.

13. Verfahren nach einem der vorstehenden Ansprüche, **dadurch gekennzeichnet, daß** die Polymerisationsbedingungen eine Temperatur zwischen 40 und 200°C, vorzugsweise zwischen etwa 60 und etwa 100°C, umfassen.

14. Verfahren nach einem der vorstehenden Ansprüche, **dadurch gekennzeichnet, daß** die Polymerisationsbedingungen einen Druck von etwa 1 bis 100 bar umfassen.

15. Verfahren nach einem der vorstehenden Ansprüche, **dadurch gekennzeichnet, daß** die Polymerisationsbedingungen eine Verweilzeit der Polymerpartikel von mindestens 5 Minuten, vorzugsweise mindestens 20 Minuten, umfassen.

16. Verfahren nach einem der vorstehenden Ansprüche, **dadurch gekennzeichnet, daß** das Olefin aus linearen oder cyclischen Olefinen, die eine oder mehrere Doppelbindungen aufweisen, gegebenenfalls zusammen mit einem oder mehreren Dienen, vorzugsweise aus Ethen, Propen, 1-Buten, 3-Methyl-1-buten, 1-Penten, 3-Methyl-1-penten, 4-Methyl-1-penten, 1-Hexen, 3-Ethyl-1-hexen, 1-Hepten, 1-Octen und 1-Decen, vorzugsweise Ethen, gegebenenfalls zusammen mit irgendeinem der aufgeführten anderen Olefine oder Diolefine, wie Hexadien, Butadien, Decadien, ausgewählt ist.

## Revendications

1. Un procédé de production d'un polymère d'oléfine ayant une large répartition de poids moléculaire voulue, comprenant :
a) l'amenée à une installation de polymérisation :
a₁) d'un matériau de polymérisation comprenant au moins une oléfine ;
a₂) d'un système de catalyseur renfermant essentiellement un composé métallocène de formule générale (I) :
(Cp)ₘM^{a}XₙYₒZₚ (I)
dans laquelle chaque Cp est identique ou différent et est l'un d'un ligand octahydrofluorényle ou fluorényle, tétrahydroindényle, indényle, cyclopentadiényle, homo- ou hétérocyclique, condensé ou non condensé, substitué ou non substitué, M est un métal de transition du groupe 3, 4, 5 ou 6 du tableau périodique (IUPAC 1990) et est lié audit ligand Cp au moins dans un mode de liaison η₅, chaque X est identique ou différent et est l'un d'un atome d'hydrogène, d'un atome d'halogène, d'un groupe hydrocarbyle en C₁-C₈, d'un groupe hydrocarbyle en C₁-C₈-hétéroatome ou d'un groupe tri-hydrocarbylsilyle en C₁-C₈, deux desdits groupes X formant éventuellement un noyau métallocyclique l'un avec l'autre et M, Y est un atome ou un groupe pontant entre deux desdits ligands Cp, Z est un atome ou un groupe pontant entre un desdits ligands Cp et ledit métal de transition M, m est 1-3, n est 1-4, o est 0 ou 1 et p est 0 ou 1, a = la valence de M = m + n + p, lequel métallocène est sensible à l'hydrogène et sous une concentration d'hydrogène constante ou nulle donne un polymère d'oléfine avec une répartition de poids moléculaire plus étroite que le polymère ayant la large répartition de poids moléculaire voulue, et
a₃) d'hydrogène sous la forme d'un agent de régulation du poids moléculaire ;
b) la mise en contact des réactifs a₁), a₂) et a₃) pendant un temps de séjour dans l'appareillage de polymérisation et sous des conditions de polymérisation pour donner un mélange de polymérisation ; et
c) la récupération à partir dudit mélange de polymérisation dudit matériau de polymérisation sous la forme du polymère d'oléfine ayant une large répartition de poids moléculaire voulue,
**caractérisé, en ce que** durant ledit temps de séjour de l'étape de mise en contact b), la pression absolue et/ou partielle de l'hydrogène est amenée à varier selon un cycle répété comprenant une première application d'une pression partielle maximale d'hydrogène et ensuite sa chute ou, de préférence, de permettre sa chute avec une consommation d'hydrogène de sorte qu'un tel cycle est répété plus d'une fois.

2. Un procédé selon la revendication 1, **caractérisé en ce qu'**il est mis en oeuvre comme un procédé continu.

3. Un procédé selon la revendication 1 ou 2, **caractérisé en ce qu'**il est mis en oeuvre dans un seul réacteur de polymérisation ou une série de réacteurs de polymérisation.

4. Un procédé selon la revendication 1, 2 ou 3, **caractérisé en ce que** ledit cycle est démarré durant la première moitié, de préférence au début, de ladite étape de mise en contact b).

5. Un procédé selon l'une quelconque des revendications 1 à 4, **caractérisé en ce que** ladite pression absolue et/ou partielle d'hydrogène est amenée à chuter ou est autorisée à chuter approximativement au niveau zéro.

6. Un procédé selon l'une quelconque des revendications précédentes, **caractérisé en ce que** le métallocène présente essentiellement un type de site actif et/ou donne à une pression partielle constante d'hydrogène a M_{w}/Mₙ = 2, de préférence un composant de catalyseur métallocène pour la polymérisation d'oléfines.

7. Un procédé selon l'une quelconque des revendications précédentes, **caractérisé en ce que** le système de catalyseur comprend un composé d'organo-aluminium, de préférence un composant de catalyseur aluminoxane pour la polymérisation d'oléfines.

8. Un procédé selon la revendication 7, **caractérisé en ce que** ledit aluminoxane est un composé de formule générale (II) : 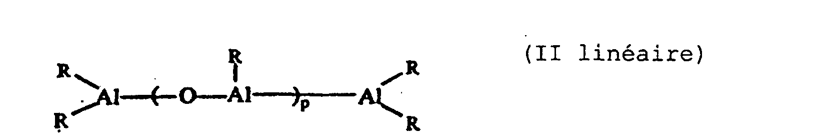 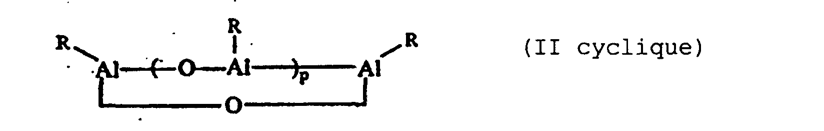
**(OAlR)**_{**p**} (II générale)
dans laquelle chaque R est identique ou différent et est un groupe alkyle en C₁-C₁₀ et p est un entier entre 1 et 40.

9. Un procédé selon l'une quelconque des revendications précédentes, **caractérisé en ce que** ledit système de catalyseur comprend un composant de catalyseur métallocène et un aluminoxane ou un produit de réaction de ceux-ci, fixé sur un support solide.

10. Un procédé selon l'une quelconque des revendications précédentes, **caractérisé en ce qu'**on utilise seulement un type de composant de catalyseur.

11. Un procédé selon l'une quelconque des revendications précédentes, **caractérisé en ce que** les conditions de polymérisation sont celles d'une polymérisation en solution, d'une polymérisation en suspension ou en phase gazeuse, de préférence d'une polymérisation en phase gazeuse.

12. Un procédé selon la revendication 11, **caractérisé en ce que** ladite polymérisation en phase gazeuse a de 2 à 50, de préférence de 5 à 40, mieux encore de 10 à 20 cycles répétés de variations de la pression partielle d'hydrogène pendant le temps de séjour du matériau polymère dans l'appareillage.

13. Un procédé selon l'une quelconque des revendications précédentes, **caractérisé en ce que** les conditions de polymérisation comprennent une température comprise entre 40 et 200° C, de préférence entre environ 60 et environ 100° C.

14. Un procédé selon l'une quelconque des revendications précédentes, **caractérisé en ce que** les conditions de polymérisation comprennent une pression d'environ 1-100 bars.

15. Un procédé selon l'une quelconque des revendications précédentes, **caractérisé en ce que** les conditions de polymérisation comprennent un temps de séjour des particules de polymère d'au moins 5 minutes, de préférence d'au moins 20 minutes.

16. Un procédé selon l'une quelconque des revendications précédentes, **caractérisé en ce que** l'oléfine est choisie parmi les oléfines linéaires ou cycliques portant une ou plusieurs doubles liaisons, éventuellement conjointement avec un ou plusieurs diènes, de préférence l'éthène, le propène, le 1-butène, le 3-méthyl-1-butène, le 1-pentène, le 3-méthyl-1-pentène, le 4-méthyl-1-pentène, le 1-hexène, le 3-éthyl-1-hexène, le 1-heptène, le 1-octène et le 1-décène, de préférence l'éthène, éventuellement conjointement avec l'une quelconque desdites autres oléfines ou dioléfines mentionnées comme l'hexadiène, le butadiène, le décadiène.
